# EUROPEAN PATENT APPLICATION

(11) **EP 3 735 088 A1**
(43) Date of publication of application: **04.11.2020**
(21) Application number: 18896528.9
(22) Date of filing: 27.12.2018
(51) Int. Cl.: H04W 74/08

(54) **METHOD FOR OPERATING ON UE AND UE**

(30) Priority: 27.12.2017 CN 201711455279
(71) Applicant: Sharp Kabushiki Kaisha, Sakai City, Osaka 590-8522 (JP)
(72) Inventor: ZHANG, Chongming, Shanghai 201206 (CN); YAMADA, Shohei, Osaka 590-8522 (JP)
(74) Representative: Müller Hoffmann & Partner
(86) International application number: PCT/CN2018/124321
(87) International publication number: WO 2019/129139

(57) **Abstract**

Embodiments of the present invention provide a method operating on user equipment (UE). The method comprises: initiating a preamble transmission counter (COUNTER) in a random access procedure to count a number of preamble transmissions in the random access procedure; and when the value of the counter (COUNTER) reaches or exceeds a preset maximum number of transmissions, determining, according to a trigger cause of the random access procedure, whether to indicate a random access problem to an upper layer of the UE.

## Description

### Technical Field

The present invention relates to the technical field of wireless communications.

### Background

With the rapid growth of mobile communications and great progress of technology, the world will move toward a fully interconnected network society where anyone or anything can acquire information and share data anytime and anywhere. It is estimated that there will be 50 billion interconnected devices by 2020, of which only about 10 billion may be mobile phones and tablet computers. The rest are not machines communicating with human beings but machines communicating with one another. Therefore, how to design a system to better support the Internet of Everything is a subject needing further and intensive study.

For this purpose, at the Third Generation Partnership Project (3GPP) RAN#64 plenary session held in March 2016, a study item on new 5G radio access technology was proposed (see non-patent literature: **RP-160671** New SID Proposal: Study on New Radio Access Technology). In description of this work project, the working frequency band of the future new communication system can be extended to 100 GHz, which can satisfy at least the requirements of enhanced mobile broadband services, the communication requirements of a large number of sets of UE in the Internet of Things, and the requirements of services requiring high reliability at the same time. The research work on this project ended in 2018.

In the research of this subject, it is planned to transmit information using beams/beam forming, which specifically includes, during communication using high frequencies, transmitting narrower beams to cope with the characteristic of excessively quick fading of channels at high frequencies. However, information transmission using narrower beams is susceptible to external changes, for example, mobile phone rotation or obstruction by other objects.

In transmission scenarios using beam forming, once a valid beam signal serving data/information transmission of UE weakens or is lower than a pre-configured threshold, the data/information transmission is interrupted, and it may be considered that a beam failure has occurred. The UE will transmit related request information (for example, a beam failure recovery request) to a network to request reconfiguration or recovery of a valid operating beam. In order to manage and control the beam failure recovery procedure, in the prior art a timer (*beamFailureRecoveryTimer*, BFR timer) is set in a MAC layer. When the UE encounters a beam failure, this timer is initiated. If the network side successfully responds to the beam failure recovery request, then this timer is stopped from operating. If the UE has not received a response from the network side before this timer expires, then after the timer expires, the MAC layer will indicate to an upper layer a link reset failure or a beam failure recovery request failure. After receiving the indication, the upper layer may determine that a radio link failure (RLF) has occurred, and may then trigger an RRC connection re-setup procedure.

It is worth noting that the UE transmits the related request information to the network side through a random access procedure. The random access procedure involves a preamble transmission counter (hereinafter referred to as COUNTER) used to count a number of preamble transmissions in the random access procedure. The UE will increase the value of the COUNTER by one each time a preamble is transmitted, until a preset maximum number of transmissions is reached or exceeded. When the value of the COUNTER reaches or exceeds the preset maximum number of transmissions, the MAC layer needs to indicate to the upper layer that a random access problem (RandomAccessProblem) has occurred. After receiving the indication, the upper layer may determine that an RLF has occurred, and may then trigger an RRC connection re-setup procedure.

Therefore, both expiration of the BFR timer or the COUNTER reaching the maximum number of transmissions in the procedure of link reconfiguration or beam failure recovery will cause the upper layer to determine that an RLF has occurred, and trigger RRC connection re-setup.

Because the COUNTER and the BFR timer are independent of each other, the following situations exist:
Situation 1: When the COUNTER reaches or exceeds the maximum number of transmissions, the BFR timer is still operating; and
Situation 2: When the BRF timer expires, the COUNTER has not reached or exceeded the maximum number of transmissions.

In both situations, the UE cannot determine, according to the received indication, whether a current link has actually failed. For example, when situation 1 occurs, the beam failure recovery procedure has not ended, but the UE only experiences a problem during the random access procedure triggered by the beam failure recovery. Many possible causes for the problem occurring in the random access may exist, for example, inaccurate measurement of candidate beams, or collision of preamble transmissions. As mentioned above, the failure of a beam may be due to mobile phone rotation or the obstruction of other objects. Once these obstacles are removed, the previously operating beam can still work normally, and the UE is quite likely to recover the previous operating beam after the random access problem occurs but before the BFR timer expires, thus leading to misjudgment and therefore causing unnecessary connection re-setup, waste of resources, and power consumption of the UE.

As another example, when situation 2 occurs, the BFR timer has expired, but the random access procedure is still in progress and is quite likely to succeed. Therefore, the determining of an RLF in this case may also be a misjudgment, thus leading to unnecessary connection re-setup, and, further, causing unnecessary waste of resources and power consumption of the UE.

Thus, the problem that needs to be solved is how to adopt corresponding measures to distinguish indications received by the UE in the aforementioned situations.

### Summary

The purpose of embodiments of the present invention is to address at least the above problems and/or disadvantages, and to provide at least the advantages described below.

According to an embodiment of the present invention, a method operating on user equipment (UE) is provided. The method may comprise: initiating a preamble transmission counter (COUNTER) in a random access procedure to count a number of preamble transmissions in the random access procedure; and when the value of the counter (COUNTER) reaches or exceeds a preset maximum number of transmissions, determining, according to a trigger cause of the random access procedure, whether to indicate a random access problem to an upper layer of the UE.

In an embodiment of the present invention, the determining may comprise: if the random access procedure is triggered by a situation or condition related to link reconfiguration or beam failure, then skipping indicating the random access problem to the upper layer of the UE; and if the random access procedure is not triggered by a situation or condition related to link reconfiguration or beam failure, then indicating the random access problem to the upper layer of the UE.

According to another embodiment of the present invention, a method operating on UE is provided. The method may comprise: initiating a preamble transmission counter (COUNTER) in a random access procedure to count a number of preamble transmissions in the random access procedure; and when the value of the counter (COUNTER) reaches or exceeds a preset maximum number of transmissions, indicating a random access problem to an upper layer of the UE, and further indicating a type of the random access problem to the upper layer of the UE.

In an embodiment of the present invention, the type of the random access problem may comprise: a type 1 random access problem, indicating the random access procedure is triggered by a situation or condition related to link reconfiguration or beam failure; and a type 2 random access problem, indicating the random access procedure is not triggered by a situation or condition related to link reconfiguration or beam failure.

In an embodiment of the present invention, the method may further comprise: when the type 1 random access problem is indicated to the upper layer of the UE, if a beam failure recovery failure is further indicated, then determining a radio link failure has occurred. Optionally, the cause of the radio link failure may be set to the beam failure recovery failure.

In an embodiment of the present invention, the method may further comprise: triggering an RRC connection re-setup procedure after the determining a radio link failure has occurred.

In an embodiment of the present invention, the further indication may comprise: indicating the type 1 random access problem and the beam failure recovery failure simultaneously or successively at a short interval.

In an embodiment of the present invention, the determining a radio link failure has occurred may comprise: initiating a first timer after the type 1 random access problem is indicated; if the beam failure recovery failure is indicated during the operating of the first timer, then determining the radio link failure has occurred; and if the first timer expires, canceling the indication of the type 1 random access problem.

Alternatively, the determining a radio link failure has occurred may comprise: initiating a second timer after the beam failure recovery failure is indicated; if the type 1 random access problem is indicated during the operating of the second timer, then determining the radio link failure has occurred; and if the second timer expires, then canceling the indication of the beam failure recovery failure.

In an embodiment of the present invention, the method may further comprise: when the type 2 random access problem is indicated to the upper layer of the UE, determining the radio link failure has occurred.

In an embodiment of the present invention, the method may further comprise: releasing, based on the indication of the type 1 random access problem, a physical random access channel resource for beam failure recovery. Optionally, the releasing may comprise: receiving a specific configuration or parameter indicating the physical random access channel resource for beam failure recovery is unavailable, or stopping an ongoing random access procedure.

According to another embodiment of the present invention, a method operating on UE is provided. The method may comprise: initiating a preamble transmission counter (COUNTER) in a random access procedure to count a number of preamble transmissions in the random access procedure; and when the value of the counter (COUNTER) reaches or exceeds a preset maximum number of transmissions, indicating a random access problem or a beam failure recovery failure to an upper layer of the UE according to a timer set in a MAC layer or a trigger cause of the random access procedure.

In an embodiment of the present invention, the indicating a random access problem or a beam failure recovery failure to an upper layer of the UE according to a timer set in a MAC layer or a trigger cause of the random access procedure may comprise: if the random access procedure is triggered by a situation or condition related to link reconfiguration or beam failure, then stopping the timer and indicating the beam failure recovery failure to the upper layer of the UE; and if the random access procedure is not triggered by a situation or condition related to link reconfiguration or beam failure, then indicating the random access problem to the upper layer of the UE.

In an embodiment of the present invention, the method may further comprise: after the random access problem or the beam failure recovery failure is indicated to the upper layer of the UE, determining a radio link failure has occurred.

In an embodiment of the present invention, the indicating a random access problem or a beam failure recovery failure to an upper layer of the UE according to a timer set in a MAC layer or a trigger cause of the random access procedure may comprise: if the timer is operating, then stopping the timer and indicating the beam failure recovery failure has occurred; and if the timer is not operating, then indicating the random access problem has occurred.

In an embodiment of the present invention, the indicating a random access problem or a beam failure recovery failure to an upper layer of the UE according to a timer set in a MAC layer or a trigger cause of the random access procedure may comprise: when the timer expires, indicating the beam failure recovery failure to the upper layer of the UE; and if the random access problem is further indicated after the beam failure recovery failure is indicated, then determining the radio link failure has occurred.

In an embodiment of the present invention, the further indication may comprise: indicating the beam failure recovery failure and the random access problem simultaneously or successively at a short interval.

In an embodiment of the present invention, the determining a radio link failure has occurred may comprise: initiating a third timer after the beam failure recovery failure is indicated, and if the random access problem is indicated during the operating of the third timer, then determining the radio link failure has occurred; and if the third timer expires, then canceling the indication of the beam failure recovery failure.

Alternatively, the determining a radio link failure has occurred may comprise: initiating a fourth timer after the random access problem is indicated; if the beam failure recovery failure is indicated during the operating of the fourth timer, then determining the radio link failure has occurred and setting the cause of the radio link failure to the beam failure recovery failure; and if the fourth timer expires, then determining a radio link failure has occurred and setting the cause of the radio link failure to the random access problem.

In an embodiment of the present invention, the method may further comprise: after the beam failure recovery failure is indicated, releasing a physical random access channel resource for beam failure recovery.

According to another embodiment of the present invention, UE is provided. The UE comprises a processor. The processor is configured to: initiate a preamble transmission counter (COUNTER) in a random access procedure to count a number of preamble transmissions in the random access procedure; and when the value of the counter (COUNTER) reaches or exceeds a preset maximum number of transmissions, determining, according to a trigger cause of the random access procedure, whether to indicate a random access problem to an upper layer of the UE.

According to another embodiment of the present invention, UE is provided. The UE comprises a processor. The processor is configured to: initiate a preamble transmission counter (COUNTER) in a random access procedure to count a number of preamble transmissions in the random access procedure; and when the value of the counter (COUNTER) reaches or exceeds a preset maximum number of transmissions, indicate a random access problem to an upper layer of the UE, and further indicate the type of the random access problem to the upper layer of the UE.

According to another embodiment of the present invention, UE is provided. The UE comprises a processor. The processor is configured to: initiate a preamble transmission counter (COUNTER) in a random access procedure to count a number of preamble transmissions in the random access procedure; and when the value of the counter (COUNTER) reaches or exceeds a preset maximum number of transmissions, indicate a random access problem or a beam failure recovery failure to an upper layer of the UE according to a timer set in a MAC layer or a trigger cause of the random access procedure.

According to the following detailed description of various embodiments of the present invention made in conjunction with the accompanying drawings, other aspects, advantages, and prominent features of the present invention will become clear to those skilled in the art.

### Brief Description of the Drawings

The foregoing and other aspects, features, and advantages of certain embodiments of the present invention will be more apparent from the following description taken in conjunction with the accompanying drawings, in which:
FIG. 1 is a flowchart of a method operating on UE according to an embodiment of the present invention;
FIG. 2 is another flowchart of a method operating on UE according to an embodiment of the present invention;
FIG. 3 is another flowchart of a method operating on UE according to an embodiment of the present invention; and
FIG. 4 is a block diagram of UE according to an embodiment of the present invention.

### Detailed Description

The following describes the present invention in detail with reference to the accompanying drawings and specific embodiments. It should be noted that the present invention is not limited to the specific embodiments described below. In addition, for simplicity, detailed description of the prior art not directly related to the present invention is omitted to avoid confusion with respect to the understanding of the present invention.

Prior to the specific description, several terms mentioned in the present invention are illustrated as follows. The terms involved in the present invention shall have the meanings set forth below, unless otherwise indicated.
- UE:: User Equipment
- RLF:: Radio Link Failure
- NR:: New Radio
- LTE:: Long Term Evolution
- eLTE:: Enhanced Long Term Evolution
- RRC:: Radio Resource Control (layer)
- MAC:: Medium Access Control (layer)
- PHY:: Physical Layer
- PDCCH:: Physical Downlink Control Channel
- RA:: Random Access
- PRACH:: Physical Random Access Channel

A plurality of embodiments according to the present invention are specifically described below, with an NR mobile communications system and its subsequent evolved version serving as exemplary application environments, and with a base station and UE that support NR serving as examples. However, it should be noted that the present invention is not limited to the following embodiments, but is applicable to more other wireless communications systems, such as an eLTE communications system, and is applicable to other base stations and UE devices, such as base stations and UE devices supporting eLTE. At the same time, the present disclosure is not limited to scenarios of radio link interruption caused by beams/beam forming, but is also applicable to scenarios of radio link interruption due to other causes.

In transmission scenarios using beam forming, once a valid beam signal serving data/information transmission of UE weakens or is lower than a pre-configured threshold, the data/information transmission is interrupted, and it may be considered that a beam failure has occurred. The UE will transmit related request information (for example, a beam failure recovery request) to a network to request reconfiguration or recovery of a valid operating beam. In order to manage and control the beam failure recovery procedure, in the prior art a timer (herein referred to as *beamFailureRecoveryTimer*, BFR timer) is set in a MAC layer.

When the UE encounters a beam failure, for example, the MAC layer receives an indication from a lower layer. Further, the indication from the lower layer may be a beam failure or a link failure, or a link reconfiguration request, or a beam failure recovery request. Once receiving such an indication, the UE will initiate this timer; or when the MAC layer determines that a beam failure recovery request or a link reconfiguration request needs to be transmitted, this timer may also be initiated.

If the network side successfully responds to the link reconfiguration request or the beam failure recovery request transmitted by the UE during the operating of the timer, then this timer is stopped from operating. If the UE has not received a response from the network side before this timer expires, after the timer expires, the MAC layer will indicate to the upper layer that a link reconfiguration request failure or a beam failure recovery request failure has occurred; or indicate to the upper layer that the link reconfiguration request or the beam failure recovery request has failed; and may further indicate to the upper layer that the link reconfiguration procedure or the beam failure recovery has failed, thus the link reconfiguration or beam failure recovery request is not responded to and a failure occurs, meaning that the link reconfiguration procedure or the beam failure recovery procedure has failed. Herein and hereinafter, these types of indications to the upper layer are collectively referred to as indications to the upper layer of request failures; after receiving the indications, the upper layer may determine that a radio link failure (RLF) has occurred, and may then trigger an RRC connection re-setup procedure.

The UE transmits the link reconfiguration request or the beam failure recovery request to the network side through a random access procedure. The random access procedure may be non-contention based RA or contention-based conflict resolution RA. In the random access procedure, a preamble transmission counter (hereinafter referred to as COUNTER) exists to count a number of preamble transmissions in the random access procedure. A specific process related to the COUNTER in the random access procedure may comprise:
Step 1: Initiate the COUNTER: when the random access procedure is initialized/triggered, the value of the COUNTER is set to one;
Step 2: Count a number of preamble transmissions in the random access procedure: when the UE does not receive a response to the UE within one time window, and when contention-based conflict resolution is unsuccessful (for example, when a contention-based conflict resolution timer expires), the value of the COUNTER is increased by one; and
Step 3: Determine whether the value of the COUNTER is equal to the value of a maximum number of transmissions plus one.
   - If the value of the COUNTER is not equal to the value of the maximum number of transmissions plus one, then the UE can continue transmitting a preamble, or may continue to perform step 2.
   - If the value of the COUNTER is equal to the value of the maximum number of transmissions plus one, then the MAC layer will indicate to the upper layer of the UE that a random access problem has occurred, or indicate to the upper layer of the UE that a problem has occurred, the problem being a random access problem. Such indications are collectively referred to herein and hereinafter as indications of random access problems. After receiving the indications, the upper layer may determine that a radio link failure has occurred, and may then trigger an RRC connection re-setup procedure.

Herein, it is determined whether the value of the COUNTER is equal to the maximum number of transmissions plus one, which is equivalent to determining whether the value of the COUNTER exceeds (is greater than) a predetermined maximum number of transmissions. If an initial value of the COUNTER is zero, then the determining herein may be to determine whether the value of the COUNTER is equal to the predetermined maximum number of transmissions.

Several embodiments of the present invention are described in detail below.

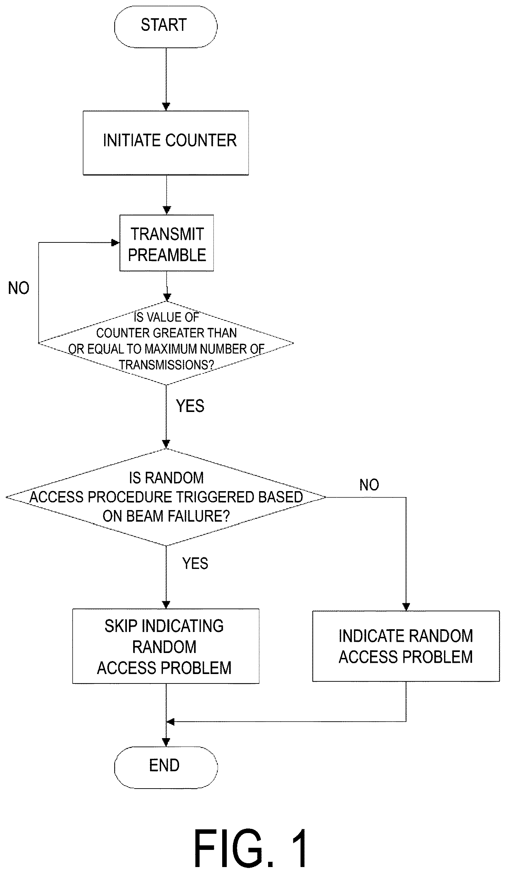

Embodiment 1 will be described below with reference to FIG. 1.

### Embodiment 1

When the value of a COUNTER exceeds or reaches a maximum number of transmissions, UE determines, according to a trigger cause of RA, whether it is needed to indicate to an upper layer that a random access problem has occurred. Preferably, the process can be as follows:
- If an initial value of the COUNTER is zero, when the value of the COUNTER reaches the maximum number of transmissions, the UE determines, according to the trigger cause of the RA, whether it is needed to indicate to the upper layer that the random access problem has occurred.
- If the initial value of the COUNTER is one, when the value of the COUNTER exceeds the maximum number of transmissions (or equals to the maximum number of transmissions plus one), the UE determines, according to the trigger cause of the RA, whether it is needed to indicate to the upper layer that the random access problem has occurred.

### Specifically:

When the value of the COUNTER exceeds or reaches the maximum number of transmissions, the process is as follows:
- If the current random access procedure is triggered or initiated by a situation or condition related to link reconfiguration or beam failure, then the UE, preferably a MAC layer of the UE, considers or determines that the random access procedure has failed, or considers or determines that the random access procedure has not been successfully completed. In other words, the UE will not report or indicate the random access problem to the upper layer. The upper layer herein may be an RRC layer of the UE.
- If the current random access procedure is not triggered by the foregoing cause, then the UE, preferably the MAC layer of the UE, reports or indicates the random access problem to the upper layer. The upper layer herein may be the RRC layer of the UE.

"The random access procedure is triggered by a situation or condition related to link reconfiguration or beam failure" mentioned above or below may be specifically one or a plurality of the following situations:
Situation 1: The random access procedure is triggered by an indication from a lower layer, and further, the indication from the lower layer may be a beam failure or a link failure, or a link reconfiguration request, or a beam failure recovery request; and
Situation 2: The random access procedure is triggered by a beam failure recovery request or a link reconfiguration request.

"The random access procedure is not triggered by the foregoing cause" mentioned above may be specifically one or a plurality of the following situations:
Situation 1: The random access procedure is not triggered by an indication from the lower layer, and further, the indication from the lower layer may be a beam failure or a link failure, or a link reconfiguration request, or a beam failure recovery request;
Situation 2: The random access procedure is not triggered by a beam failure recovery request or a link reconfiguration request;
Situation 3: The random access procedure is triggered by a PDCCH order; and
Situation 4: The random access procedure is triggered by the RRC layer, for example, via a system information request.

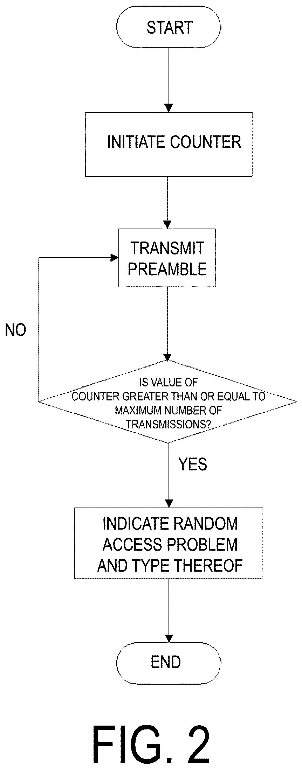

Embodiment 2 and Embodiment 3 will be described below with reference to FIG. 2.

### Embodiment 2

The difference of this embodiment compared with Embodiment 1 is that when UE reports a random access problem to an upper layer, the UE also indicates that a random access procedure is triggered by a situation or condition related to link reconfiguration or beam failure.

The specific implementation manner may be as follows:
When the value of a COUNTER exceeds or reaches a maximum number of transmissions, the process is as follows:
- If the current random access procedure is triggered by the situation or condition related to link reconfiguration or beam failure, then the UE, preferably a MAC layer of the UE, reports or indicates the random access problem to the upper layer, and indicates that this random access procedure or random access procedure problem is triggered by the situation or condition related to link reconfiguration or beam failure. The upper layer herein may be an RRC layer of the UE. Another implementation manner of this solution is that the UE indicates a type 1 random access problem to the upper layer. The so-called type 1 random access problem refers to a random access procedure or a random access procedure problem being triggered by a situation or condition related to link reconfiguration or beam failure.
- If the current random access procedure is not triggered by the foregoing cause, then the UE, preferably the MAC layer of the UE, reports or indicates the random access problem to the upper layer. The upper layer herein may be the RRC layer of the UE. Another implementation manner of this solution is that the UE indicates a type 2 random access problem to the upper layer. The so-called type 2 random access problem refers to a random access procedure or a random access procedure problem not being triggered by a situation or condition related to link reconfiguration or beam failure, but is triggered by other causes, such as a PDCCH order or the RRC layer.

Based on the random access problem indicated by the UE to the upper layer, the upper layer of the UE, which may be preferably the RRC layer, will perform different actions, which may be specifically:
When the indication of the type 1 random access problem is received, based on the indication, the UE determines that a radio link has failed; and optionally, the UE may set the cause of the RLF to a beam failure recovery failure or a link reconfiguration failure; and optionally, the UE may trigger an RRC connection re-setup procedure.

Alternatively,
when the indication of the type 1 random access problem is received, if the UE further receives an indication of a request failure, then the UE determines that the radio link has failed; and optionally, the UE may set the cause of the RLF to a beam failure recovery failure or a link reconfiguration failure; and optionally, the UE may trigger an RRC connection re-setup procedure.

"When the indication of the type 1 random access problem is received, if the UE further receives an indication of a request failure" may be specifically:
the UE simultaneously receives the indication of the type 1 random access problem and the indication of the request failure, or the UE receives both the indication of the type 1 random access problem and the indication of the request failure within a short interval;
   or
the UE first receives the indication of the type 1 random access problem, and then receives the indication of the request failure. Preferably, the UE starts a timer or a time window when the UE receives the indication of the type 1 random access problem:
   if the UE receives the indication of the request failure when this timer is still operating or within the time window, then the UE determines that the radio link has failed; and optionally, the UE may set the cause of the RLF to a beam failure recovery failure or a link reconfiguration failure; and optionally, the UE may trigger an RRC connection re-setup procedure and optionally stop this timer or time window;
   if the timer expires, or the time window has been exceeded, then the UE discards the indication of the type 1 random access problem received previously, or cancels the indication of the type 1 random access problem received previously;
   or
the UE first receives the indication of the request failure, and then receives the indication of the type 1 random access problem. Preferably, the UE starts a timer or a time window when the UE receives the indication of the request failure:
   if the UE receives the indication of the type 1 random access problem when this timer is still operating or within the time period of the time window, then the UE determines that the radio link has failed; and optionally, the UE may set the cause of the RLF to a beam failure recovery failure or a link reconfiguration failure; and optionally, the UE may trigger an RRC connection re-setup procedure and optionally stop this timer or time window; and
   if the timer expires, or the time window has been exceeded, then the UE discards the indication of the previously received request failure, or cancels the indication of the previously received request failure.

In addition, when the indication of the type 2 random access problem is received, the UE may determine that the radio link has failed; and optionally, the UE may set the cause of the RLF to the random access problem, and further, the UE may trigger an RRC connection re-setup procedure.

### Embodiment 3

The difference from Embodiment 2 is that when or after receiving an indication of a type 1 random access problem, the UE, especially an upper layer of the UE such as an RRC layer, can instruct a lower layer of the UE such as a MAC layer or a physical layer, to clear, release, or deactivate a PRACH resource for beam failure recovery or link reconfiguration, thereby preventing the UE from repeatedly transmitting preambles.

Another implementation manner of this solution may be that when or after receiving the indication of the type 1 random access problem, the UE, especially the upper layer of the UE such as the RRC layer, indicates a specific configuration or parameter to the lower layer of the UE such as the MAC layer or the physical layer; when the lower layer of the UE, such as the MAC layer or the physical layer, receives the configuration or parameter, the lower layer of the UE considers that the PRACH resource for beam failure recovery or link reconfiguration is unavailable, does not exist, or is deactivated.

Another implementation manner of this solution may be that when or after receiving the indication of the type 1 random access problem, the UE, especially the upper layer of the UE, such as the RRC layer, instructs the lower layer of the UE, such as the MAC layer or the physical layer, to stop an ongoing random access procedure, or resets the MAC layer.

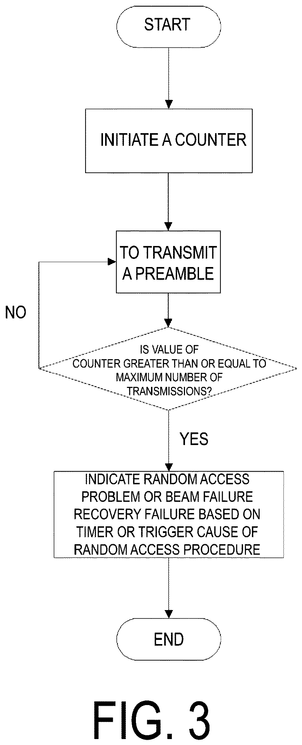

Embodiments 4 to Embodiment 6 will be described below with reference to FIG. 3.

### Embodiment 4

When the value of a COUNTER exceeds or reaches a maximum number of transmissions, UE determines, according to whether a BFR timer is operating or a trigger cause of RA, whether to indicate a random access problem or a beam failure recovery failure or a link reconfiguration failure to an upper layer.

The specific implementation manner may be as follows:
When the value of the COUNTER exceeds or reaches the maximum number of transmissions, the process is as follows:
- If the random access procedure is triggered by a situation or condition related to link reconfiguration or beam failure, the UE, preferably a MAC layer of the UE, considers that the BFR timer expires; preferably, if the BFR timer is operating, then the UE stops the BFR timer, and indicates, to the upper layer, which may be optionally an RRC layer of the UE, that a request has failed.

This process can also be expressed as: when the value of the COUNTER exceeds or reaches the maximum number of transmissions, if the random access procedure is triggered by the situation or condition related to link reconfiguration or beam failure, then the UE, preferably, the MAC layer of the UE, stops the BFR timer, and indicates, to the upper layer, which may be optionally the RRC layer of the UE, that the request has failed.

When or after the UE, especially the RRC layer of the UE, receives this indication, the UE may determine that a radio link has failed; and optionally, the UE may set the cause of the RLF to a beam failure recovery failure or a link reconfiguration failure; and optionally, the UE may trigger an RRC connection re-setup procedure.
- If the random access procedure is not triggered by the situation or condition related to link reconfiguration or beam failure, then the UE, preferably, the MAC layer of the UE, indicates a random access problem to the upper layer, which may be optionally the RRC layer of the UE.

When or after the UE, especially the RRC layer of the UE, receives the indication of the random access problem, the UE may determine that the radio link has failed; and optionally, the UE may set the cause of the RLF to the random access problem; and optionally, the UE may trigger an RRC connection re-setup procedure.

Another implementation manner of this embodiment may be as follows:
When the value of the COUNTER exceeds or reaches the maximum number of transmissions, the process is as follows:
- If the BFR timer is operating, then the UE stops the BFR timer and indicates, to the upper layer, which may be optionally the RRC layer of the UE, that the request has failed.

When or after the UE, especially the RRC layer of the UE, receives the indication of the request failure, the UE may determine that the radio link has failed; and optionally, the UE may set the cause of the RLF to a beam failure recovery failure or a link reconfiguration failure; and optionally, the UE may trigger an RRC connection re-setup procedure.
- If the BFR timer is not operating, then the UE indicates, to the upper layer, which may be optionally the RRC layer of the UE, that a random access problem has occurred.

When or after the UE, especially the RRC layer of the UE, receives the indication of the random access problem, the UE may determine that the radio link has failed; and optionally, the UE may set the cause of the RLF to the random access problem; and optionally, the UE may trigger an RRC connection re-setup procedure.

### Embodiment 5

When a BFR timer expires, the UE, especially a MAC layer of the UE, indicates to an upper layer of the UE, which may be preferably an RRC layer, that a request has failed. When the UE, especially the upper layer of the UE, for example, the RRC layer, receives the indication of the request failure, if an indication of a random access problem is further received, then the UE determines that a radio link has failed; and optionally, the UE can set the cause of the RLF to a beam failure recovery failure or a link reconfiguration failure; and optionally, the UE may trigger an RRC connection re-setup procedure.

"When the indication of the request failure is received, if an indication of a random access problem is further received" may be specifically:
The UE, especially the RRC layer of the UE, simultaneously receives the indication of the request failure and the indication of the random access problem; or the UE, within a short interval, receives both the indication of the request failure and the indication of the random access problem;
   or
the UE, especially the RRC layer of the UE, first receives the indication of the request failure, and then receives the indication of the random access problem; preferably, the UE starts a timer or a time window when the UE receives the indication of the request failure:
   if the UE receives the indication of the random access problem when this timer is still operating or within the time window, then the UE determines that the radio link has failed; and optionally, the UE may set the cause of the RLF to a beam failure recovery failure or a link reconfiguration failure; and optionally, the UE may trigger an RRC connection re-setup procedure and optionally stop this timer or time window; and
   if the timer expires, or the time window has been exceeded, then the UE discards the indication of the previously received request failure, or cancels the indication of the previously received request failure;
   or
the UE, especially the RRC layer of the UE, first receives the indication of the random access problem, and then receives the indication of the request failure; preferably, the UE starts a timer or a time window when the UE receives the indication of the random access problem:
   if the UE receives the indication of the request failure when this timer is still operating or within the time window, then the UE determines that the radio link has failed; and optionally, the UE may set the cause of the RLF to a beam failure recovery failure or a link reconfiguration failure; and optionally, the UE may trigger an RRC connection re-setup procedure and optionally stop this timer or time window;
   if the timer expires, or the time window has been exceeded, then the UE may determine that the radio link has failed; and optionally, the UE may set the cause of the RLF to the random access problem; and optionally, the UE may trigger an RRC connection re-setup procedure.

### Embodiment 6

The difference between Embodiment 4 and Embodiment 5 is that when or after receiving an indication of a request failure, the UE, especially an upper layer of the UE such as an RRC layer, can instruct a lower layer of the UE such as a MAC layer or a physical layer, to clear, release, or deactivate a PRACH resource for beam failure recovery or link reconfiguration. This prevents the UE from repeatedly transmitting preambles.

Another embodiment of this solution may be the following: when or after receiving the indication of the request failure, the UE, especially the upper layer of the UE, such as the RRC layer, indicates a specific configuration or parameter to the lower layer of the UE, such as the MAC layer or the physical layer; when the lower layer of the UE, such as the MAC layer or the physical layer, receives the configuration or parameter, the lower layer of the UE considers that the PRACH resource for beam failure recovery or link reconfiguration is unavailable, does not exist, or is deactivated.

Another implementation of this solution may be the following: when or after receiving the indication of the request failure, the UE, especially the upper layer of the UE, such as the RRC layer, instructs the lower layer of the UE, such as the MAC layer or the physical layer, to stop an ongoing random access procedure, or resets the MAC layer.

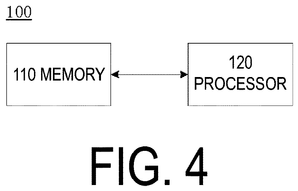

Embodiment 7 will be described below with reference to FIG. 4.

### Embodiment 7

As shown in FIG. 4, UE 100 according to an embodiment of the present invention may comprise a memory 110 and a processor 120. The memory 110 may store instructions or code for executing the operations described according to any one of Embodiments 1 to Embodiment 6. The processor 120 may be configured to execute the instructions or code stored in the memory 110.

According to an embodiment of the present invention, UE is provided. The UE comprises a processor (for example, processor 120). The processor is configured to: initiate a preamble transmission counter (COUNTER) in a random access procedure to count a number of preamble transmissions in the random access procedure; and when the value of the counter (COUNTER) reaches or exceeds a preset maximum number of transmissions, determining, according to a trigger cause of the random access procedure, whether to indicate a random access problem to an upper layer of the UE.

In an embodiment of the present invention, the processor may be configured to: if the random access procedure is triggered by a situation or condition related to link reconfiguration or beam failure, then skip indicating the random access problem to the upper layer of the UE; and if the random access procedure is not triggered by a situation or condition related to link reconfiguration or beam failure, then indicate the random access problem to the upper layer of the UE.

According to an embodiment of the present invention, UE is provided. The UE comprises a processor (for example, processor 120). The processor is configured to: initiate a preamble transmission counter (COUNTER) in a random access procedure to count a number of preamble transmissions in the random access procedure; and when the value of the counter (COUNTER) reaches or exceeds a preset maximum number of transmissions, indicate a random access problem to an upper layer of the UE, and further indicate the random access problem type to the upper layer of the UE.

In an embodiment of the present invention, the type of the random access problem may comprise: a type 1 random access problem, indicating the random access procedure is triggered by a situation or condition related to link reconfiguration or beam failure; and a type 2 random access problem, indicating the random access procedure is not triggered by a situation or condition related to link reconfiguration or beam failure.

In an embodiment of the present invention, the processor may further be configured to: when the type 1 random access problem is indicated to the upper layer of the UE, if a beam failure recovery failure is further indicated, then determine that a radio link failure has occurred. Optionally, the cause of the radio link failure may be set to the beam failure recovery failure.

In an embodiment of the present invention, the processor may further be configured to: trigger an RRC connection re-setup procedure after determining that the radio link failure has occurred.

In an embodiment of the present invention, the processor may be configured to: indicate the type 1 random access problem and the beam failure recovery failure simultaneously or successively at a short interval.

In an embodiment of the present invention, the processor may be configured to: initiate a first timer after the type 1 random access problem is indicated; if the beam failure recovery failure is indicated during the operating of the first timer, then determine that the radio link failure has occurred; and if the first timer expires, then cancel the indication of the type 1 random access problem.

Alternatively, the processor may be configured to: initiate a second timer after the beam failure recovery failure is indicated; if the type 1 random access problem is indicated during the operating of the second timer, then determine that the radio link failure has occurred; and if the second timer expires, then cancel the indication of the beam failure recovery failure.

In an embodiment of the present invention, the processor may further be configured to: when the type 2 random access problem is indicated to the upper layer of the UE, determine that the radio link failure has occurred.

In an embodiment of the present invention, the processor may further be configured to: release, based on the indication of the type 1 random access problem, a physical random access channel resource for beam failure recovery. Optionally, the processor may be configured to: receive a specific configuration or parameter indicating the physical random access channel resource for beam failure recovery is unavailable, or stop the ongoing random access procedure.

According to an embodiment of the present invention, UE is provided. The UE comprises a processor (for example, processor 120). The processor is configured to: initiate a preamble transmission counter (COUNTER) in a random access procedure to count a number of preamble transmissions in the random access procedure; and when the value of the counter (COUNTER) reaches or exceeds a preset maximum number of transmissions, indicate a random access problem or a beam failure recovery failure to an upper layer of the UE according to a timer set in a MAC layer or a trigger cause of the random access procedure.

In an embodiment of the present invention, the processor may be configured to: if the random access procedure is triggered by a situation or condition related to link reconfiguration or beam failure, then stop the timer and indicating the beam failure recovery failure to the upper layer of the UE; and if the random access procedure is not triggered by a situation or condition related to link reconfiguration or beam failure, then indicate the random access problem to the upper layer of the UE.

In an embodiment of the present invention, the processor may further be configured to: after the random access problem or the beam failure recovery failure is indicated to the upper layer of the UE, determine that a radio link failure has occurred.

In an embodiment of the present invention, the processor may be configured to: if the timer is operating, then stop the timer and indicate that the beam failure recovery failure has occurred; and if the timer is not operating, then indicate that the random access problem has occurred.

In an embodiment of the present invention, the processor may be configured to: when the timer expires, indicate the beam failure recovery failure to the upper layer of the UE; and if the random access problem is further indicated after the beam failure recovery failure is indicated, then determine that the radio link failure has occurred.

In an embodiment of the present invention, the processor may be configured to: indicate the beam failure recovery failure and the random access problem simultaneously or successively at a short interval.

In an embodiment of the present invention, the processor may be configured to: initiate a third timer after the beam failure recovery failure is indicated, and if the random access problem is indicated during the operating of the third timer, then determine that the radio link failure has occurred; and if the third timer expires, then cancel the indication of the beam failure recovery failure.

Alternatively, the processor may be configured to: initiate a fourth timer after the random access problem is indicated; if the beam failure recovery failure is indicated during the operating of the fourth timer, then determine that the radio link failure has occurred and set the cause of the radio link failure to the beam failure recovery failure; and if the fourth timer expires, then determine that the radio link failure has occurred and set the cause of the radio link failure to the random access problem.

In an embodiment of the present invention, the processor may further be configured to: after the beam failure recovery failure is indicated, release a physical random access channel resource for beam failure recovery.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a nonvolatile memory (for example, a flash memory), or other memory systems.

The program for implementing the functions of the embodiments of the present invention may be recorded on a computer-readable recording medium. The corresponding functions may be achieved by reading programs recorded on the recording medium and executing them by the computer system. The so-called "computer system" herein may be a computer system embedded in the device, which may include operating systems or hardware (for example, peripherals). The "computer-readable recording medium" may be a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed through circuits (for example, monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies replacing existing integrated circuits emerge from advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioner, office equipment, vending machines, and other household appliances, may be used as UE devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulted from the appropriate combinations of the technical means disclosed in different embodiments are also included within the technical scope of the present invention. In addition, components with the same effect described in the above embodiments may be replaced with one another.

## Claims

1. A method operating on user equipment (UE), the method comprising:
initiating a preamble transmission counter (COUNTER) in a random access procedure to count a number of preamble transmissions in the random access procedure; and
when the value of the counter (COUNTER) reaches or exceeds a preset maximum number of transmissions, determining, according to a trigger cause of the random access procedure, whether to indicate a random access problem to an upper layer of the UE.

2. The method according to claim 1, wherein the determining comprises:
if the random access procedure is triggered by a situation or condition related to link reconfiguration or beam failure, then skipping indicating the random access problem to the upper layer of the UE; and
if the random access procedure is not triggered by a situation or condition related to link reconfiguration or beam failure, then indicating the random access problem to the upper layer of the UE.

3. A method operating on user equipment (UE), the method comprising:
initiating a preamble transmission counter (COUNTER) in a random access procedure to count a number of preamble transmissions in the random access procedure; and
when the value of the counter (COUNTER) reaches or exceeds a preset maximum number of transmissions, indicating a random access problem to an upper layer of the UE, and further indicating a type of the random access problem to the upper layer of the UE.

4. The method according to claim 3, wherein the type of the random access problem comprises: a type 1 random access problem, indicating the random access procedure is triggered by a situation or condition related to link reconfiguration or beam failure; and a type 2 random access problem, indicating the random access procedure is not triggered by a situation or condition related to link reconfiguration or beam failure.

5. The method according to claim 4, further comprising: releasing, based on an indication of the type 1 random access problem, a physical random access channel resource for beam failure recovery.

6. A method operating on user equipment (UE), the method comprising:
initiating a preamble transmission counter (COUNTER) in a random access procedure to count a number of preamble transmissions in the random access procedure; and
when the value of the counter (COUNTER) reaches or exceeds a preset maximum number of transmissions, indicating a random access problem or a beam failure recovery failure to an upper layer of the UE according to a timer set in a MAC layer or a trigger cause of the random access procedure.

7. The method according to claim 6, wherein the indicating a random access problem or a beam failure recovery failure to an upper layer of the UE according to a timer set in a MAC layer or a trigger cause of the random access procedure comprises:
if the random access procedure is triggered by a situation or condition related to link reconfiguration or beam failure, then stopping the timer and indicating the beam failure recovery failure to the upper layer of the UE; and
if the random access procedure is not triggered by a situation or condition related to link reconfiguration or beam failure, then indicating the random access problem to the upper layer of the UE.

8. The method according to claim 6, wherein the indicating a random access problem or a beam failure recovery failure to an upper layer of the UE according to a timer set in a MAC layer or a trigger cause of the random access procedure comprises:
when the timer expires, indicating the beam failure recovery failure to the upper layer of the UE; and
if the random access problem is further indicated after the beam failure recovery failure is indicated, then determining a radio link failure has occurred.

9. The method according to claim 6, further comprising: releasing, after the beam failure recovery failure is indicated, a physical random access channel resource for beam failure recovery.

10. User equipment (UE), comprising:
a processor, configured to: initiate a preamble transmission counter (COUNTER) in a random access procedure to count a number of preamble transmissions in the random access procedure; and
when the value of the counter (COUNTER) reaches or exceeds a preset maximum number of transmissions, determining, according to a trigger cause of the random access procedure, whether to indicate a random access problem to an upper layer of the UE.
